# EUROPÄISCHE PATENTSCHRIFT

(11) **EP 4 504 483 B1**
(45) Veröffentlichungstag und Bekanntmachung des Hinweises auf die Patenterteilung: **28.01.2026**
(21) Anmeldenummer: 23717405.7
(22) Anmeldetag: 06.04.2023
(51) Int. Cl.: B29C 48/00, B29C 48/17, B32B 5/14, B32B 3/14, B32B 27/08

(54) **SICHERES ELEMENT MIT EINEM KARTENFÖRMIGEN KÖRPER AUS MEHREREN SCHICHTEN UND VERFAHREN ZUR DESSEN HERSTELLUNG**
SECURE ELEMENT HAVING A CARD-TYPE BODY MADE OF A PLURALITY OF LAYERS, AND METHOD FOR THE PRODUCTION THEREOF
ÉLÉMENT DE SÉCURITÉ AYANT UN CORPS DE TYPE CARTE CONSTITUÉ D'UNE PLURALITÉ DE COUCHES, ET SON PROCÉDÉ DE PRODUCTION

(30) Priorität: 07.04.2022 DE 102022001194
(43) Veröffentlichungstag der Anmeldung: 12.02.2025
(73) Patentinhaber: Giesecke+Devrient ePayments GmbH, 81677 München (DE)
(72) Erfinder: RIEDL, Josef, 85395 Attenkirchen (DE)
(74) Vertreter: Giesecke+Devrient IP
(86) Internationale Anmeldenummer: PCT/EP2023/025163
(87) Internationale Veröffentlichungsnummer: WO 2023/193959

(56) Entgegenhaltungen:
- EP-A1- 3 275 682
- DE-A1- 102009 058 803
- DE-A1- 102016 013 776
- US-A1- 2018 177 254

## Beschreibung

Die Erfindung betrifft ein sicheres Element mit einem kartenförmigen Körper aus mehreren, übereinander angeordneten und durch Coextrusion erzeugten Schichten sowie ein Verfahren zur dessen Herstellung.

Sichere Elemente mit einem kartenförmigen Körper sind als Chipkarten verbreitet. Diese werden beispielsweise als Ausweiskarten, Zugangskarten oder Bankkarten (Girocard, Kreditkarte, Paymentkarte usw.), zumeist in Verbindung mit typischerweise als ein- oder mehrfarbige Karten mit einem Motiv herausgegeben. Es sind verschiedene Arten der farbigen Gestaltung möglich: Karten mit einem farbigen Kern, Karten mit einem farbigen Kartenrand, Karten mit farbigen Folien, transparente und transluzente Karten, usw. Je nach Ausführung soll ein bestimmter ästhetischer Eindruck erweckt werden. Die Herstellung solcher Karten kann in einem Bogenlaminierverfahren oder durch Coextrusion von Folien erfolgen.

Aus der US 2003/0203177 A1 ist ein Verfahren zur Herstellung einer Plastikfolie mittels Coextrusion durch Vermischung verschiedener Farb-Batches bekannt, so dass in Aufsicht ein Muster mit zufälliger Verteilung mehrerer Farben entsteht. Hierbei werden zwei oder mehr aus jeweiligen Extrudern ausgegebene Materialströme in eine Kavität eines Gehäuses eingeführt bis die vermischten Materialströme an einem anderen Ende der Kavität wieder ausgepresst werden.

Aus der US 2017/0182697 A1 ist die Herstellung mehrfarbiger Kunststofffolien bekannt, die auf einer zufälligen Vermischung unterschiedlicher Farbkomponenten beruhen. Die Kunststofffolien dienen z.B. zur Herstellung eines Kajaks, in dem zwei Folien durch Thermoumformung in eine vorbestimmte Form gebracht und dann miteinander verschweißt werden.

DE 4118624 C1 beschreibt ein Verfahren zur Herstellung einer Kunststoffolie mit einer Farbstruktur durch Extrusion. Vor der Extrusion wird eine heterogene Mischung von zwei oder mehr Kunststoffmaterialien bereitgestellt und mit einem Treibmittel versetzt. Die Kunststoffmaterialien unterscheiden sich beispielsweise, indem sie unterschiedlich eingefärbt sind. Die heterogene Mischung wird über die Erweichungstemperatur erwärmt, wodurch das Treibmittel aktiviert wird. Die erwärmte heterogene Mischung wird anschließend extrudiert und danach tiefgezogen. Nach dem Tiefziehen entsteht eine Farbstruktur, die beispielsweise einer Holzmaserung ähnelt.

Aus der DE 102017115380 A1 ist die Herstellung einer lebensmitteltaugliche Folie mit randomisiertem Farbverlauf bekannt, die für durch Thermoformen hergestellte Artikel wie Schalen, Becher oder Blisterpackungen geeignet ist.

Die Folie besitzt eine Dekorlage, die eine Matrix aus einem ersten polymeren Werkstoff und in die Matrix eingebetteten Schlieren aus einem zweiten polymeren Werkstoff umfasst. Im optischen Eindruck erscheint die Folie als Vielzahl streifenförmiger, parallel zur Maschinenrichtung verlaufender Schlieren mit unregelmäßig schwankender Breite und verwaschenen Rändern. Der Dekoreffekt wird durch Extrusion von schlecht mischbaren polymeren Werkstoffen erhalten, die sich vorzugsweise in ihrer Massefließrate unterscheiden.

DE 10 2009 058803 A1 offenbart einen Kartenkörper, insbesondere zur Herstellung einer Chip- und/oder Magnetstreifenkarte, dessen Aufbau wenigstens eine coextrudierte Folie umfaßt, die zumindest einem Flächenbereich mit einer ersten Materialeigenschaft und zumindest einem zweiten Flächenbereich mit einer zweiten Materialeigenschaft aufweist.

Es ist Aufgabe der Erfindung, ein sicheres Element mit einem kartenförmigen Körper aus mehreren erzeugten Schichten anzugeben, welcher im Volumen eingefärbt ist und mit verschiedenen zufallsverteilten Farbtönen aufwartet.

Diese Aufgabe wird gelöst durch ein sicheres Element gemäß den Merkmalen des Anspruchs 1 und ein Verfahren zur Herstellung des sicheren Elements gemäß den Merkmalen des Anspruchs 10. Vorteilhafte Ausgestaltungen ergeben sich aus den abhängigen Ansprüchen.

Es wird ein sicheres Element mit einem kartenförmigen Körper vorgeschlagen, das aus mehreren, übereinander angeordneten und durch Coextrusion erzeugten Schichten besteht. Das sichere Element umfasst eine erste Schicht als Basisschicht aus einem ersten Material. Das erste Material umfasst einen Basispolymer. In der ersten Schicht ist eine erste Farbe als Grundfarbe des Körpers homogen verteilt. Das sichere Element umfasst zumindest eine zweite Schicht als Farbschicht aus einem zweiten Material. Das zweite Material umfasst ein Trägerpolymer. In einer jeweiligen zweiten Schicht sind ein oder mehrere Farbflächenbereiche in einer zweiten Farbe, die unterschiedlich zu der ersten Farbe ist, ungleichmäßig und in zufälligen Formen verteilt. Das Basispolymer und das Trägerpolymer weisen dabei unterschiedliche Materialeigenschaften auf, so dass sie sich nicht homogen vermischen, wodurch in Draufsicht und im Querschnitt eine randomisierte (zufallsverteilte) Mehrfarbigkeit erkennbar ist.

Die zufallsverteilten Farbflächenbereiche schaffen ein einzigartiges Merkmal für jedes einzelne sichere Element und können beispielsweise elektronisch, z.B. mittels einer Kamera oder mithilfe eines Scanners, als eindeutiges Identifikationsmerkmal erfasst und verarbeitet werden.

Die Anzahl der übereinander angeordneten Schichten ist prinzipiell beliebig wählbar. In der einfachsten Form kann das sichere Element aus zwei Schichten bestehen, nämlich einer Basisschicht, in der die Grundfarbe homogen verteilt ist, und einer zweiten Schicht, welche ungleichmäßig verteilte Farbflächenbereiche aufweist. In einer anderen Ausgestaltung kann eine Mehrzahl an zweiten Schichten mit jeweiligen einzelnen oder mehreren Farbflächenbereiche in jeweiligen zweiten Farben vorgesehen sein. Es versteht sich, dass bei einer Mehrzahl von zweiten Schichten in einer jeweiligen zweiten Schicht die eine oder die mehreren Farbflächenbereiche in der jeweiligen zweiten Farbe ungleichmäßig verteilt sind, wobei die zweiten Farben mehrerer zweiter Schichten bevorzugt unterschiedlich zueinander und unterschiedlich zu der ersten Farbe sind.

Voraussetzung für die zufallsverteilte Mehrfarbigkeit des kartenförmigen Körpers sowohl in der Draufsicht als auch im Querschnitt ist, dass sich die Farben der ersten Schicht und der zumindest einen zweiten Schicht nicht homogen vermischen. Dies wird dadurch erreicht, dass das Basispolymer und die jeweiligen Trägerpolymere der zumindest einen zweiten Schicht gezielt unterschiedliche Materialeigenschaften aufweisen.

In einer ersten Variante sind das Basispolymer und das Trägerpolymer Polymere mit unterschiedlichen Schmelzviskositäten. Beispielsweise kann das eine Polymer ein langkettiges Polycarbonat (PC) mit hoher Molmasse und das andere Polymer ein kurzkettiges Polycarbonat (PC) umfassen. Bevorzugt ist das andere Polymer aus einem wiederverwendeten Material, z.B. sog. Ocean Plastic, das auf Meereskunststoffabfall basiert. Ein solchermaßen wiederverwendetes Material ist von Haus aus kurzkettig. Nach Aufbereitung und Kettenverlängerung kann dieses dann z.B. als Basispolymer für die Basisschicht verwendet werden.

Es ist zweckmäßig, wenn eine Schmelze-Volumenfließrate des einen Polymers etwa 5 cm³/10 min und die Schmelze-Volumenfließrate des anderen Polymers etwa 35 cm³/10 min bei einer Temperatur von 300°C und einer Masse von 1,2 kg beträgt. Die Schmelze-Volumenfließrate ist auch als Melt Volume-flow Rate (MVR) bekannt.

Alternativ oder zusätzlich sind das Basispolymer und das Trägerpolymer Polymere mit unterschiedlichen Schmelze-Temperaturen. Die Materialparameter Schmelzviskosität und Schmelze-Temperatur spielen dabei zum Teil zusammen. Die Schmelzviskosität ist auch von der Temperatur abhängig, d.h. die Schmelzviskosität kann in bestimmten Grenzen auch über die Temperatursteuerung justiert werden. Insbesondere kann in dieser Ausgestaltung das eine Polymer Polymilchsäure (PLA) und das andere Polymer Polycarbonat (PC) umfassen. Beispielsweise kann das Polymilchsäure (PLA) umfassende Polymer mit einer Schmelztemperatur von 200°C und das andere Polymer Polyester mit einer Schmelztemperatur von 260°C gewählt werden.

In einer weiteren alternativen oder zusätzlichen Ausgestaltung sind das Basispolymer und das Trägerpolymer Polymere mit unterschiedlichen polaren und unpolaren Eigenschaften. Dies können z.B. Polyester und polare oder unpolare Polyolefine sein. Insbesondere kann das eine Polymer PETG (ein mit Glykol modifiziertes Polyethylenterephthalat (PET)) und das andere Polymer Polyethylen sein.

Es ist nicht erforderlich, dem Trägerpolymer oder dem Basispolymer ein Treibmittel zuzusetzen. Ein erfindungsgemäß hergestelltes sicheres Element weist deshalb keine treibmittelbedingten Poren oder Einschlüsse auf.

Es wird weiter ein Verfahren zur Herstellung eines sicheren Elements vorgeschlagen, das gemäß einem oder mehreren der vorstehenden Ausführungen ausgestaltet ist. Das Verfahren umfasst die Schritte:
a) Bereitstellen eines ersten Materialstroms eines ersten Materials mit einem Basispolymer, in dem eine erste Farbe als Grundfarbe des Körpers verteilt ist,
b) Bereitstellen eines zweiten Materialstroms eines zweiten Materials mit einem Trägerpolymer, in dem eine zweite Farbe, die unterschiedlich zu der ersten Farbe ist, in einer oder mehreren Farbansammlungen ungleichmäßig verteilt ist, wobei das Trägerpolymer des zweiten Materialstroms und das Basispolymer unterschiedliche Materialeigenschaften aufweisen, so dass die Materialien sich nicht homogen vermischen können,
c) Kombinieren des ersten und des zweiten Materialstroms in einer Extrusionsvorrichtung zu einem Schichtaufbau mit einer Basisschicht, die das erste Material mit dessen Farbgebung umfasst, und zumindest einer Farbschicht, die das zweite Material mit einer oder mehreren ungleichmäßig verteilten Farbflächenbereichen umfasst.

Das erfindungsgemäße Verfahren weist den Vorteil auf, dass handelsübliche Extrusionsvorrichtungen eingesetzt werden können, wobei insbesondere auf den Einsatz von teuren Mehrkanaldüsen verzichtet werden kann.

In einer zweckmäßigen Ausgestaltung werden der Extrusionsvorrichtung der erste Materialstrom aus einem ersten Extruder und der zweite Materialstrom aus zumindest einem zweiten Extruder zugeführt.

Der erste Materialstrom und der zweite Materialstrom werden in der Extrusionsvorrichtung, insbesondere einer Kompressionseinrichtung und/ oder einem Förderblock und/oder einer Düse der Extrusionsvorrichtung, einem Massedruck ausgesetzt, der zwischen 10 bar und 100 bar liegt. Bevorzugt liegt der Massedruck zwischen 10 bar und 60 bar. Am meisten bevorzugt liegt der Massedruck zwischen 20 bar und 50 bar.

Die Erfindung wird nachfolgend näher anhand von Ausführungsbeispielen in der Zeichnung beschrieben. Es zeigen:
- Fig. 1: eine Querschnittsansicht eines erfindungsgemäßen sicheren Elements, das aus drei Schichten erzeugt ist;
- Fig. 2: eine Aufsicht auf einen Ausschnitt eines kartenförmigen Körpers;
- Fig. 3: einen Querschnitt durch einen kartenförmigen Körper;
- Fig. 4: ein Blockschaltbild einer Extrusionsvorrichtung zur Herstellung des erfindungsgemäßen sicheren Elements; und
- Fig. 5: eine fotographische Darstellung einer Aufsicht auf ein erfindungsgemäßes sicheres Element, das gemäß dem erfindungsgemäßen Verfahren hergestellt ist.

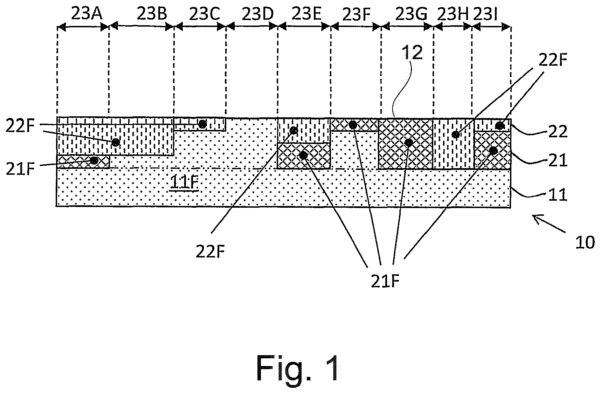

Fig. 1 zeigt eine schematische Querschnittsdarstellung eines kartenförmigen Körpers 10 eines sicheren Elements gemäß einer ersten Ausgestaltungsvariante. Beispielhaft weist der Körper 10 des sicheren Elements einen Schichtaufbau aus drei übereinander angeordneten, durch Coextrusion erzeugten u Schichten auf. Der Schichtaufbau besitzt zumindest eine Sichtoberfläche 12, die eine randomisierte Mehrfarbigkeit aufweist, die in Aufsicht auf das sichere Element deutlich erkennbar ist. Zweckmäßig ist auch in Ansicht von der der Sichtoberseite gegenüberliegenden Unterseite her eine randomisierte Mehrfarbigkeit erkennbar.

Das sichere Element kann in bekannter Weise als Chipkarte ausgebildet sein. Eine solche Chipkarte wird beispielsweise als Ausweiskarte, Zugangskarte oder Bankkarte (Girocard, Kreditkarte, Paymentkarte usw.) verwendet, wobei im Inneren des Kartenkörpers ein Chipmodul integriert ist. Ein solches Chipmodul, das einen (Halbleiter-)Chip und eine kontaktlose und/oder kontaktbehaftete Schnittstelle umfasst, ist in sämtlichen Figuren nicht dargestellt. Dem Fachmann ist der konstruktive Aufbau von Chipkarte geläufig, so dass an dieser Stelle auf eine eingehende Beschreibung verzichtet wird.

Der kartenförmige Körper 10 des sicheren Elements weist im Beispiel der Fig. 1 einen dreilagigen Schichtaufbau mit einer ersten Schicht 11 als Basisschicht sowie zwei zweiten Schichten 21, 22 auf, die jeweils Farbschichten bilden. In der in Fig.1 gezeigten Ausgestaltungsvariante kommt die zweite Schicht 21 direkt auf einer (z.B. oberen) Hauptseite der ersten Schicht 11, die im folgenden auch Basisschicht genannt wird, zum Liegen. Auf der von der ersten Schicht 11 abgewandten Seite der zweiten Schicht 21 ist die zweite Schicht 22 angeordnet.

Die erste Schicht 11 als Basisschicht besteht aus einem ersten Material, das ein Basispolymer umfasst. Häufig besteht die Basisschicht 11 aus einem transparenten Material. Alternativ kann das Basispolymer der ersten Schicht 11 mit Farbpartikeln vermischt sein, so dass die erste Schicht 11 eine erste Farbe 11F aufweist. Die erste Farbe 11 F als Grundfarbe kann beispielsweise weiß oder grau sein, wobei grundsätzlich jede beliebige Farbe gewählt sein kann.

Jede der zweiten Schichten 21, 22 besteht aus einem zweiten Material, das jeweils ein Trägerpolymer umfasst. Zweckmäßig sind die Trägerpolymere der beiden zweiten Schichten 21, 22 voneinander und auch von dem Material der Basisschicht 11 verschieden. Vorzugsweise unterscheiden sich die Trägerpolymere hinsichtlich ihrer Viskosität. Weiter sind die beiden zweiten Schichten 21, 22 mit Farbpartikeln in unterschiedlichen Farben versehen, die den Schichten jeweils eine eigene Grundfarbe geben. Beispielsweise kann die Grundfarbe der zweiten Schicht 21 grün sein und die Grundfarbe der zweiten Schicht 22 blau. In einer besonderen Variante kann eine der beiden Schichten 21, 22 auch transparent sein. Um Mischungen und Übergänge durch Überlagerung zu ermöglichen sind die Schichten 21, 22 zweckmäßig nicht völlig opak ausgeführt sondern leicht transluzent, so dass bei Überlagerung zweier zweiter Schichten 21, 22 die untere durch die darüberliegende hindurch wahrnehmbar ist und es zu einem Farbmischeffekt kommt.

Um in Draufsicht und im Querschnitt eine zufallsverteilte Mehrfarbigkeit des kartenförmigen Körpers 10 des sicheren Elements zu erreichen, weisen das Basispolymer des ersten Materials der ersten Schicht 11 und die Trägerpolymere der jeweiligen zweiten Materialien der zweiten Schichten 21, 22 unterschiedliche Materialeigenschaften auf. Vorzugsweise besitzen die für die Basisschicht 11 und die zweiten Schichten 21, 22 verwendeten Polymere unterschiedliche Schmelzviskositäten und/oder unterschiedlichen Schmelze-Temperaturen oder unterschiedlichen polaren/unpolaren Eigenschaften.

Durch eine hinreichende Verschiedenheit der Polymere der Basisschicht 11 und der Trägerpolymere der zweiten Schichten 21, 22 wird erreicht, dass sich die Polymere der verschiedenen Schichten und damit die darin enthaltenen Farbpartikel (Farb-Masterbatches) bei der Extrusion nicht homogen vermischen. Die Farbpartikel selbst bzw. die verwendeten Farben bzw. Farbstoffe sind hierbei nicht entscheidend.

Schmelzviskosität und Schmelze-Temperatur beeinflussen einander. Die Schmelzviskosität kann in bestimmten Grenzen über die Temperatursteuerung justiert werden.

Eine Materialkombination mit unterschiedlichen Viskositäten entsteht z.B. bei Kombination eines langkettiges Polycarbonats (PC) mit hoher Molmasse mit einem kurzkettigen Polycarbonat. Dabei kann jedes nach Wahl für die Basisschicht oder ein Trägerpolymer verwendet werden.

Eine Materialkombination, deren Materialien sich über Schmelze-Temperaturen unterscheiden, besteht z.B. aus Polymilchsäure (PLA) und Polycarbonat. Auch hier ist wählbar, welcher der beiden Polymere für den Basispolymer oder den Trägerpolymer verwendet wird.

Eine Materialkombination mit unterschiedlichen polaren Eigenschaften sind Polyester und Polyolefine (die wahlweise polar oder unpolar sein können).

Besonders geeignet für die Bereitstellung solcher Materialkombinationen sind wiederverwendete Materialien, wie sogenanntes Ocean Plastic, das auf Meereskunststoffabfall basiert. Rezyklierte oder wiederverwendbare Materialien sind von Haus aus kurzkettig und können z.B. als Basismaterial oder Trägermaterial in Kombination mit aufbereiteten rezyklierten Materialien, die kettenverlängert sind, verwendet werden.

Für Kombinationen mit unterschiedlichen Schmelzviskositäten können Polymere gewählt werden, die sich in der Schmelze-Volumenfließrate (Melt-Volume-Flow-Rate (MVR)) unterscheiden. Beispielsweise kann die Schmelze-Volumenfließrate des einen Polymers bei 5 cm3/10 min liegen und die Schmelze-Volumenfließrate (MVR) des anderen Polymers 35 cm3/10 min betragen. Die Schmelze-Volumenfließrate gelten jeweils bei einer Temperatur von 300°C und einer Masse von 1,2 kg.

Werden Polymere mit unterschiedlichen Schmelze-Temperaturen verwendet, so kann z.B. als ein Polymer Polymilchsäure (PLA) mit einer SchmelzTemperatur von 200°C und als anderes Polymer Polyester mit einer SchmelzTemperatur von 260°C gewählt werden.

Werden Polymere mit unterschiedlichen polaren oder unpolaren Eigenschaften gewählt, können als das eine Polymer PETG und als das andere Polymer Polyethylen gewählt werden.

Die unterschiedlichen Materialeigenschaften bewirken bei der Extrusion, dass keine homogene Vermischung des Basispolymers der ersten Schicht 11 und der Trägerpolymere der zweiten Schichten 21, 22 erfolgt. Stattdessen bilden sich in der extrudierten Folie zufällige Farbflächenbereiche 23, in denen jeweils das Polymer einer Schicht und damit die diesem Polymer beigemischte Farbe dominiert, indem es dort einen höheren Volumenanteil aufweist als das andere. Werden etwa zwei Polymere eingesetzt, die sich in ihrer Viskosität unterscheiden, entsteht eine Folie mit Farbflächenbereichen, in denen das höherviskose Polymer dominiert und Farbflächenbereichen, in denen das Polymer mit der geringeren Viskosität dominiert.

Die Farbflächenbereiche haben zufällige Größen und zufällige Randkonturen. Sie können an ihren Flächenbereichsgrenzen in der Wahrnehmung für einen Nutzer fließend ineinander übergehen oder die Flächenbereichsgrenzen sind nahezu scharf. Die Farbflächenbereiche können sich auch in der Oberflächenqualität unterscheiden. Beispielsweise können Flächenbereiche, in denen ein Material mit geringer Viskosität dominiert, eine unebene Oberfläche aufweisen, während Flächenbereiche, in denen ein Material mit hoher Viskosität dominiert, im Vergleich dazu sehr glatt und gleichmäßig eben wirken. Solche Unterschiede in der Oberflächenqualität können erwünscht sein, um den Eindruck der Farbverteilung zu unterstützen. Alternativ kann vorgesehen sein, solche Unterschiede in der Oberflächenqualität und der Schichtdicke durch einen Pressvorgang einzuebnen. In Draufsicht ergibt sich auf diese Weise eine randomisierte Mehrfarbigkeit.

Aufgrund ihrer unterschiedlichen Materiaeigenschaften vermischen sich die Trägerpolymere der zweiten Schichten 21, 22 zwar undefiniert gut aber nur schlecht homogen. Die verschiedenen Trägerpolymere vermischen sich vor allem ineinander. Ebenfalls als Folge der unterschiedlichen Materialeigenschaften sowie als Folge gezielter Extruderparametereinstellungen kommt es beim Zusammenführen der Trägerpolymere der zweiten Schichten 21,22 in der Extrusionsvorrichtung 50 ferner zu - gewollten - Materialflussunregelmäßigkeiten, die eine ungleichmäßige Verteilung der Trägerpolymere der zweiten Schichten 21,22 bewirken oder unterstützen.

Aufgrund dieser Vermischungsbeeinträchtigungen ordnen sich die Trägerpolymere im Flächenstrom praktisch in der Regel nicht in homogener Verteilung übereinander an. Stattdessen entstehen Bereiche, in denen nur eines der Trägerpolymere vorhanden ist, Bereiche, in denen sich eine dünne Schicht des ersten Trägerpolymers mit einer im Vergleich dazu dickeren Schicht des zweiten Trägerpolymers überlagert, Bereiche in denen beide Trägerpolymere vermischt sind und Bereiche, die im Wesentlichen von der Basisschicht gebildet werden. Fig. 1 veranschaulicht schematisch Überlagerungsmöglichkeiten.

Fig. 1 zeigt einen Querschnitt durch einen aus eine Basisschicht 11 und zwei zweiten Schichten 21, 22 aufgebauten kartenförmigen Körper 10. Der Körper 10 besitzt eine konstante Gesamtdicke. Innerhalb der konstanten Gesamtdicke variieren die Dickenverteilungen der drei Schichten 11, 21, 22 vertikal zur Sichtoberfläche 12. Sie liegen nicht in gleichmäßiger Form übereinander sondern es bilden sich, bezogen auf die Sichtoberseite 12, variierende, zufällige Dickenverteilungen; lediglich die Basisschicht 11 ist als durchgehende Trägerschicht ausgebildet und, allerdings ebenfalls mit variierender Dicke, über die ganze Fläche des Körpers 10 vorhanden.

Im Beispiel besitze die erste zweite Schicht 21 eine leicht transluzente Farbe 21F, die zweite zweite Schicht 22 eine im Vergleich dazu deutlich transluzente Farbe 22F und die Basisschicht 11 eine stark transluzente Farbe 11F.

Für einen Betrachter ergibt sich aufgrund der unterschiedlichen lokalen Verteilung der Schichten 11, 21, 22 für die in Fig. 1 dargestellte zufällige Situation von links nach rechts ein Farbeindruck einer Abfolge von Farbflächenbereichen 23. In einem ersten Farbflächenbereich 23A, nachfolgend kurz Bereich genannt, ist die Schicht 22 dicker als die Schicht 21 und dominiert mit ihrer Farbe den Farbeindruck. Im angrenzenden Bereich 23B fehlt die erste zweite Schicht 21 und der Farbeindruck wird von der Farbe 22F der zweiten Schicht 22 dominiert. Im angrenzenden Bereich 23C ist nur die Schicht 22 in geringer Dicke vorhanden, so dass der Farbeindruck durch eine Mischung der deutlich transluzenten Farbe 22F der zweiten zweiten Schicht 22 und der stark tansluzenten Farbe 11F der Basisschicht 11 bestimmt wird. Im angrenzenden Bereich 23D ist nur die Basisschicht 11 vorhanden und der Farbeindruck wird durch deren Farbe 11F bestimmt. Im Bereich 23E sind die beiden zweiten Schichten 21,22 in gleicher Stärke vorhanden, sodass ihre Farben 21F, 22F sich mischen, wobei die weniger transluzente Farbe 21F der ersten zweiten Schicht 21 durch die stärker transluzente Farbe 22F hindurchscheint. In den angrenzenden Bereichen 23F und 23G ist, in unterschiedlicher Stärke, jeweils nur die Schicht 21 vorhanden. Der Farbeindruck bestimmt sich entsprechend einmal stärker und einmal schwächer durch die Farbe 21F der Schicht 21. Im Bereich 23H bestimmt die Schicht 22 den Farbeindruck, im Bereich 23I mischen sich die Farben 21F, 22F der Schichten 21, 22, wobei die Farbe 21F im Farbeindruck überwiegt.

Ist die erste Farbe 21F beispielsweise blau, die zweite Farbe 22F grün und die Farbe der Basisschicht 11 weiß ergibt sich für einen Betrachter für die in Fig. 1 dargestellte zufällige Situation z.B. eine Abfolge von Farbeindrücken von links nach rechts wie folgt: der Bereich 23 A erscheint grünlich-türkis, der Bereich 23B deutlich grün, der Bereich 23C leicht grün, der Bereich transluzent weiß, der Bereich 23E türkis, der Bereich 23F hellblau, der Bereich 23G blau, der Bereich 23H grün und der Bereich 23I blau-türkis.

Die Anzahl und Verteilung der jeweiligen Farbflächenbereiche 21F, 22F, 11F der jeweiligen zweiten Schichten 21, 22 und der Basisschicht 11 ist zufällig und unabhängig voneinander.

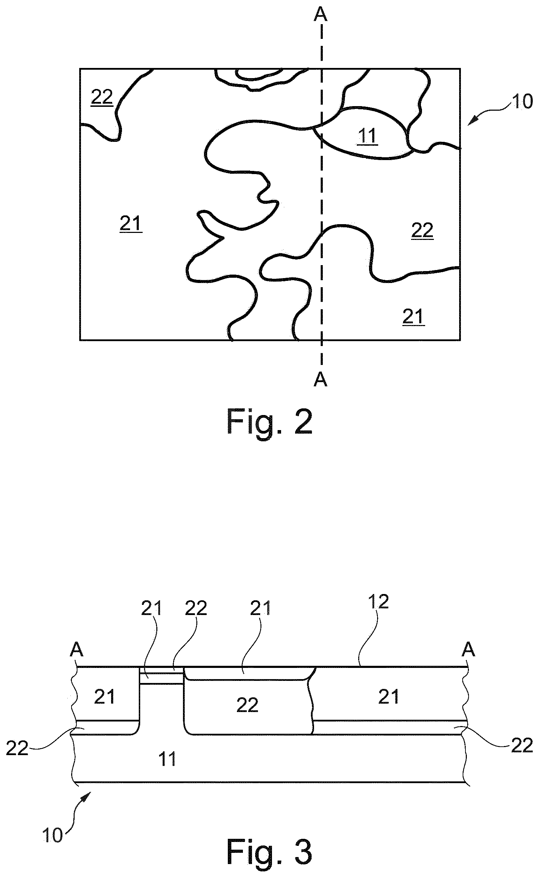

Fig. 2 zeigt in Aufsicht auf die Sichtoberfläche 12 einen Ausschnitt eines kartenförmigen Körpers 10 eines Sicherheitselements mit einer Basisschicht 11 und zwei zweiten Schichten 21, 22, die unter Bildung einer zufälligen Verteilung von unterschiedlichen zufällig geformten Farbflächenbereichen 23 entsprechend den jeweiligen Farben der Schichten 21, 22 miteinander verbunden wurden.

Es bilden sich in ungleichmäßiger Verteilung Flächenbereiche, in denen die erste der zweiten Schichten 21, 22 und damit deren Farbe dominiert und Bereiche, in denen die zweite der zweiten Schichten 21, 22 und damit deren Farbe dominiert sowie Bereiche, in denen die Basisschicht 11 und damit deren Farbe dominiert. Ist eine der zweiten Schichten 21, 22 transparent, führt das in von dieser zweiten Schicht dominierten Bereichen zu einer deutlichen Aufhellung und Opazitätsverminderung der Farbe der anderen zweiten Schicht 21, 22. Aus einem intensiven Blau wird beispielsweise ein milchiges Hellblau. Ist auch die Basisschicht transparent, verstärkt sich der Effekt.

Fig. 3 veranschaulicht schematisch an einen Querschnitt durch die in Fig. 2 gezeigte Verteilung entlang der Linie A - A das Zustandekommen unterschiedlicher Farbflächenbereiche. In einem ersten Bereich, gesehen von oben nach unten in Fig. 2, dominiert die zweite Schicht 21, in einem Zwischenbereich dominiert die Basisschicht 11, in einem folgenden Bereich dominiert die zweite Schicht 22 und in einem anschließenden Bereich wieder die zweite Schicht 21. Angedeutet ist jeweils, dass in den von einer zweiten Schicht 21, 22 oder der Basisschicht 11 dominierten Bereichen die Materialien der jeweils anderen Schichten in der Regel ebenfalls vorhanden sind, jedoch in deutlich geringerer Konzentration. Die Oberflächen der aneinandergrenzenden Schichtbereiche müssen, wie in Fig. 3 angedeutet, nicht plan sein. Entsprechend den variierenden Schichtdicken können dadurch - erwünschte - zufällig Farbverläufe innerhalb eines Bereichs bewirkt werden.

Zweckmäßig wird der in Fig. 1 schematisch gezeigte Aufbau symmetrisch angelegt und der kartenförmige Körper 10 aus fünf Schichten aufgebaut, wobei auf beiden Seiten der Basisschicht 11 jeweils symmetrisch zwei zweite Schichten 21, 22 angelegt werden. Auf diese Weise entsteht auf beiden Seiten der ersten Schicht 11 eine zufällige Verteilung von Farbflächenbereichen 23, wie sie zuvor geschrieben wurde. Anzahl und Verteilung der Farbflächenbereiche 23 der jeweiligen zweiten Schichten 21, 22 sind dabei unabhängig voneinander. In weiteren Varianten können auch jeweils mehr als zwei zweite Schichten 21, 22 auf beiden Seiten der Basisschicht 11 aufgebracht werden; denkbar ist auch, unterschiedliche Zahlen von zweiten Schichten 21,22 auf den Seiten einer Basisschicht 11 aufzubringen. Ferner kann auch die Basisschicht 11 aus mehreren Schichten bestehen.

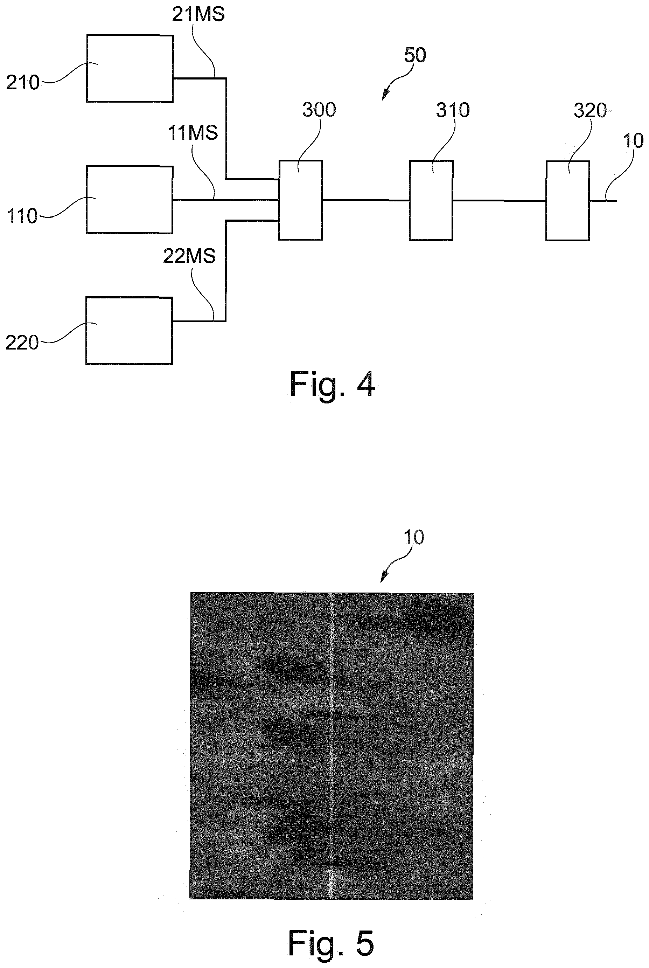

Im Herstellungsprozess, der nachfolgend unter Bezugnahme auf Fig. 4 näher erläutert wird, kann dabei ein Materialstrom für die zweiten Schichten 21, 22 aufgeteilt werden.

Fig. 4 zeigt eine Extrusionsvorrichtung 50, die zur Herstellung des kartenförmigen Körpers 10 gemäß den Ausführungsbeispielen in den Fig. 1 und 4 für ein sicheres Element verwendet wird. Die Extrusionsvorrichtung 50 umfasst einen ersten Extruder 110 zur Abgabe eines ersten Materialstroms 11MS aus dem ersten Material mit dem Basispolymer. Ferner sind zwei zweite Extruder 210, 220 zur Abgabe eines jeweiligen zweiten Materialstroms 21MS, 22MS mit einem Trägerpolymer vorgesehen. Der erste Materialstrom 11MS und die beiden zweiten Materialströme 21MS, 22MS werden einem Förderblock 300 (sog. "feed block") zugeführt.

Ausgangsmaterial für die Extruder 110, 210, 220 sind jeweils Polymere in Granulatform. Das Ausgangsmaterial wird zweckmäßig bei ca. 60°C bis 80°C vorgetrocknet. Treibmittel werden nicht zugesetzt.

Im Förderblock 300 werden die Materialströme zu einem kombinierten Materialstrom vereinigt, der über eine Düse 310 (sog. "die") als Flächenstrom ausgegeben wird. Der Flächenstrom besitzt zum Beispiel einen Schichtaufbau, wie er prinzipiell in Fig. 1 dargestellt ist.

In einer optionalen nachfolgenden Kompressionseinrichtung 320 wird der Flächenstrom und damit der Schichtaufbau zu einer Folie verfestigt. Die Folie beinhaltet die späteren kartenförmigen Körper 10.

Der Massedruck in der Düse 310 liegt zweckmäßig zwischen 10 bar und 100 bar. Bevorzugt liegt der Massedruck zwischen 10 bar und 60 bar bzw. 20 Bar und 50 Bar.

Fig. 5 veranschaulicht in Schwarzweißdarstellung eine realitätsnahe bildliche Aufsicht auf einen wie vorstehend beschrieben ausgeführten kartenförmigen Körper 10, wobei die Zufallsverteilung von Farbflächenbereichen 23 aus drei Farben (schwarz - grau - weiß, entsprechend z.B. schwarz- blau - grün) erkennbar ist. Dadurch weist der kartenförmige Körper 10 ein eindeutiges optisches Merkmal auf, das optisch erfasst und ausgewertet werden kann.

Alle vorstehend beschriebenen Strukturelemente können grundsätzlich auch anderes als anhand der Ausführungsbeispiele beschrieben frei miteinander kombiniert werden; die Ausführungsbeispiele sind nicht als Einschränkung auf bestimmte Kombinationen von Elementen zu verstehen.

## Patentansprüche

1. Sicheres Element mit einem kartenförmigen Körper (10) mit einer Sichtoberfläche aus mehreren, übereinander angeordneten und durch Coextrusion erzeugten Schichten (11, 21, 22), umfassend:
- eine erste Schicht (11) als Basisschicht aus einem ersten Material, das ein Basispolymer umfasst,
- zumindest eine zweite Schicht (21, 22) als Farbschicht aus einem zweiten Material, das ein Trägerpolymer umfasst, wobei die zumindest eine zweite Schicht (21, 22) eine Farbe besitzt,
- die zumindest eine zweite Schicht (21, 22) und die erste Schicht (11) in der Weise in variierenden Dickenverteilungen vertikal zur Sichtoberfläche (12) des Körpers (10) übereinander angeordnet sind, dass in ungleichmäßiger Verteilung Farbflächenbereiche (23) gebildet sind, in denen die zumindest eine zweite Schicht (21, 22) und damit deren Farbe (21F, 22F) dominiert, sowie Farbflächenbereiche (23), in denen eine andere Schicht (11, 21, 22) des kartenförmigen Körpers (10) und damit deren Farbe dominiert,
- wobei das Basispolymer und das Trägerpolymer unterschiedliche Materialeigenschaften aufweisen, so dass sie sich nicht homogen vermischen, wodurch in Draufsicht auf einen kartenförmigen Körper (10) eine randomisierte Mehrfarbigkeit erkennbar ist.

2. Sicheres Element nach Anspruch 1, **dadurch gekennzeichnet, dass** die übereinander angeordneten Schichten (11, 21, 22) frei von treibmittelbedingten Poren oder Einschlüssen sind.

3. Sicheres Element nach Anspruch 1, **dadurch gekennzeichnet, dass** die erste Schicht (11) transparent ist oder in der ersten Schicht (11) eine erste Farbe (11F) als Grundfarbe des kartenförmigen Körpers (10) verteilt ist.

4. Sicheres Element nach einem der vorhergehenden Ansprüche, **dadurch gekennzeichnet, dass** das Basispolymer und das Trägerpolymer Polymere mit unterschiedlichen Schmelzviskositäten oder mit unterschiedlichen Schmelze-Temperaturen sind.

5. Sicheres Element nach einem der vorhergehenden Ansprüche, **dadurch gekennzeichnet, dass** ein Polymer langkettiges Polycarbonat (PC) mit hoher Molmasse und das andere Polymer kurzkettiges Polycarbonat, insbesondere aus wiederverwendeten Materialien, umfasst.

6. Sicheres Element nach einem der vorhergehenden Ansprüche, **dadurch gekennzeichnet, dass** eine Schmelze-Volumenfließrate des einen Polymers etwa 5 cm³/10 min und die Schmelze-Volumenfließrate des anderen Polymers etwa 35 cm³/10 min bei einer Temperatur von 300 °C und einer Masse von 1,2 kg beträgt.

7. Sicheres Element nach einem der vorhergehenden Ansprüche, **dadurch gekennzeichnet, dass** ein Polymer Polymilchsäure (PLA) und das andere Polymer Polycarbonat (PC) umfasst.

8. Sicheres Element nach einem der vorhergehenden Ansprüche, **dadurch gekennzeichnet, dass** das eine Polymer Polymilchsäure (PLA) mit einer Schmelztemperatur von 200 °C und das andere Polymer Polyester mit einer Schmelztemperatur von 260 °C ist.

9. Sicheres Element nach einem der vorhergehenden Ansprüche, **dadurch gekennzeichnet, dass** das Basispolymer und das Trägerpolymer Polymere mit unterschiedlichen polaren oder unpolaren Eigenschaften sind.

10. Sicheres Element nach einem der vorhergehenden Ansprüche, **dadurch gekennzeichnet, dass** das eine Polymer PETG und das andere Polymer Polyethylen ist.

11. Sicheres Element nach einem der vorhergehenden Ansprüche, **dadurch gekennzeichnet, dass** das Trägerpolymer transluzent ist, so dass eine unter der das Trägerpolymer enthaltenden zweiten Schicht (22) angeordnete weitere zweite Schicht (21) durch das Trägerpolymer wahrnehmbar ist.

12. Verfahren zur Herstellung eines sicheren Elements gemäß einem der vorhergehenden Ansprüche, mit den Schritten:
a) Bereitstellen eines ersten Materialstroms (11MS) eines ersten Materials mit einem Basispolymer, das eine erste Farbe (11F) als Grundfarbe des Körpers (10) besitzt;
b) Bereitstellen mindestens eines zweiten Materialstroms (21MS, 22MS) eines zweiten Materials mit einem Trägerpolymer, das eine zweite Farbe (21F, 22F), die unterschiedlich zu der ersten Farbe (11F) ist, besitzt, wobei das Trägerpolymer des zweiten Materialstroms und das Basispolymer unterschiedliche Materialeigenschaften aufweisen, so dass sie sich nicht homogen vermischen;
c) Vereinigen des ersten und des mindestens einen zweiten Materialstroms (11MS, 21MS, 22MS) in einer Extrusionsvorrichtung (50) zu einem Schichtaufbau mit einer Basisschicht (11), die das erste Material umfasst, und zumindest einer Farbschicht (21, 22), die das zweite Material umfasst, wobei die Schichten (11, 21, 22) vertikal zur Sichtoberfläche (12) des Körpers (10) in variierenden Dickenverteilungen übereinander liegen und ungleichmäßig verteilte Farbflächenbereiche (23) bilden, wodurch in Draufsicht auf den Körper (10) eine randomisierte Mehrfarbigkeit erkennbar ist.

13. Verfahren nach Anspruch 12, bei dem der Extrusionsvorrichtung (50) der erste Materialstrom (11MS) aus einem ersten Extruder (110) und der zweite Materialstrom (21MS, 22MS) aus zumindest einem zweiten Extruder (210, 220) zugeführt werden.

14. Verfahren nach einem der Ansprüche 12 oder 13, bei dem der erste Materialstrom (11MS) und der zweite Materialstrom (21MS, 22MS) in der Extrusionsvorrichtung (50), insbesondere einer Kompressionseinrichtung (320) und/oder einem Förderblock (300) und/oder einer Düse (310) der Extrusionsvorrichtung (50), einem Massedruck zwischen 10 und 100 bar, bevorzugt 10 und 60 bar, und am meisten bevorzugt 20 bis 50 bar, ausgesetzt werden.

15. Verfahren nach einem der Ansprüche 12 bis 14, **dadurch gekennzeichnet, dass** bei der Vereinigung der Materialströme (11MS, 21MS, 22MS) Materialflussunregelmäßigkeiten der Materialströme (21MS, 22MS) des zweiten Materials zugelassen werden, die eine ungleichmäßige Verteilung der Trägerpolymere der zweiten Schichten (21, 22) bewirken.

## Claims

1. Secure element having a cardlike body (10) with a visible surface composed of a plurality of layers (11, 21, 22) arranged one atop another and generated by coextrusion, comprising:
- a first layer (11) as base layer composed of a first material which comprises a base polymer,
- at least one second layer (21, 22) as color layer composed of a second material which comprises a carrier polymer, the at least one second layer (21, 22) possessing a color,
- the at least one second layer (21, 22) and the first layer (11) are arranged one atop another in varying thickness distributions vertically with respect to the visible surface (12) of the body (10) in such a way that in nonuniform distribution, color surface regions (23) are formed in which the at least one second layer (21, 22) and therefore its color (21F, 22F) dominates, and also color surface regions (23) in which a different layer (11, 21, 22) of the cardlike body (10) and therefore its color dominates,
- wherein the base polymer and the carrier polymer have different physical properties, so that they do not mix homogeneously, as a result of which, in plan view onto a cardlike body (10), a randomized polychromatism is apparent.

2. Secure element according to Claim 1, **characterized in that** the layers (11, 21, 22) arranged one atop another are free from blowing agent-induced pores or inclusions.

3. Secure element according to Claim 1, **characterized in that** the first layer (11) is transparent or in the first layer (11) a first color (11F) as base color of the cardlike body (10) is distributed.

4. Secure element according to any of the preceding claims, **characterized in that** the base polymer and the carrier polymer are polymers having different melt viscosities or having different melting temperatures.

5. Secure element according to any of the preceding claims, **characterized in that** one polymer comprises long-chain polycarbonate (PC) of high molar mass and the other polymer comprises short-chain polycarbonate, more particularly composed of recycled materials.

6. Secure element according to any of the preceding claims, **characterized in that** a melt volume flow rate of the one polymer is about 5 cm³/10 min and the melt volume flow rate of the other polymer is about 35 cm³/10 min at a temperature of 300°C with a mass of 1.2 kg.

7. Secure element according to any of the preceding claims, **characterized in that** one polymer comprises polylactic acid (PLA) and the other polymer comprises polycarbonate (PC).

8. Secure element according to any of the preceding claims, **characterized in that** the one polymer is polylactic acid (PLA) having a melting temperature of 200°C and the other polymer is polyester having a melting temperature of 260°C.

9. Secure element according to any of the preceding claims, **characterized in that** the base polymer and the carrier polymer are polymers having different polar or nonpolar properties.

10. Secure element according to any of the preceding claims, **characterized in that** the one polymer is PETG and the other polymer is polyethylene.

11. Secure element according to any of the preceding claims, **characterized in that** the carrier polymer is translucent, and so a further second layer (21) arranged under the second layer (22) containing the carrier polymer is perceptible through the carrier polymer.

12. Method for producing a secure element according to any of the preceding claims, with the steps of:
a) providing a first material stream (11MS) of a first material with a base polymer which possesses a first color (11F) as base color of the body (10);
b) providing at least one second material stream (21MS, 22MS) of a second material with a carrier polymer which possesses a second color (21F, 22F), which is different to the first color (11F), wherein the carrier polymer of the second material stream and the base polymer have different physical properties, so that they do not mix homogeneously;
c) uniting the first and the at least one second material streams (11MS, 21MS, 22MS) in an extrusion device (50) to give a layer structure with a base layer (11) which comprises the first material and with at least one color layer (21, 22) which comprises the second material, wherein the layers (11, 21, 22) lie one atop another in varying thickness distributions vertically with respect to the visible surface (12) of the body (10) and form nonuniformly distributed color surface regions (23), as a result of which, in plan view onto the body (10), a randomized polychromatism is apparent.

13. Method according to Claim 12, in which the extrusion device (50) is supplied with the first material stream (11MS) from a first extruder (110) and with the second material stream (21MS, 22MS) from at least one second extruder (210, 220).

14. Method according to either of Claims 12 and 13, in which the first material stream (11MS) and the second material stream (21MS, 22MS) in the extrusion device (50), more particularly a compression facility (320) and/or a feed block (300) and/or a die (310) of the extrusion device (50), are exposed to a melt pressure of between 10 and 100 bar, preferably 10 and 60 bar, and most preferably 20 to 50 bar.

15. Method according to any of Claims 12 to 14, **characterized in that** in the uniting of the material streams (11MS, 21MS, 22MS), material flow irregularities of the material streams (21MS, 22MS) of the second material are permitted which bring about nonuniform distribution of the carrier polymers of the second layers (21, 22).

## Revendications

1. Élément de sécurité présentant un corps (10) en forme de carte, pourvu d'une surface visible constituée par plusieurs couches (11, 21, 22) superposées et produites par coextrusion, comprenant :
- une première couche (11) en tant que couche de base en une première matière, qui comprend un polymère de base,
- au moins une deuxième couche (21, 22) en tant que couche colorée en une deuxième matière, qui comprend un polymère support, ladite au moins une deuxième couche (21, 22) présentant une couleur,
- ladite au moins une deuxième couche (21, 22) et la première couche (11) étant superposées verticalement avec des répartitions d'épaisseur variables par rapport à la surface visible (12) du corps (10) de telle sorte que des zones de surface colorées (23) avec une répartition irrégulière, dans lesquelles ladite au moins une deuxième couche (21, 22), et donc sa couleur (21F, 22F), domine, ainsi que des zones de surface colorées (23), dans lesquelles une autre couche (11, 21, 22) du corps (10) en forme de carte, et donc sa couleur, domine, sont formées,
- le polymère de base et le polymère support présentant des propriétés matérielles différentes, de telle sorte qu'ils ne se mélangent pas de manière homogène, suite à quoi on peut identifier, en vue du dessus sur un corps (10) en forme de carte, des couleurs multiples aléatoires.

2. Élément de sécurité selon la revendication 1, **caractérisé en ce que** les couches (11, 21, 22) superposées sont dépourvues de pores provoqués par des agents gonflants ou d'inclusions.

3. Éléments de sécurité selon la revendication 1, **caractérisé en ce que** la première couche (11) est transparente ou **en ce qu'**une première couleur (11F) est répartie dans la première couche (11) en tant que couleur de base du corps (10) en forme de carte.

4. Élément de sécurité selon l'une des revendications précédentes, **caractérisé en ce que** le polymère de base et le polymère support sont des polymères présentant des viscosités en masse fondue différentes ou des températures de fusion différentes.

5. Élément de sécurité selon l'une des revendications précédentes, **caractérisé en ce qu'**un polymère comprend du polycarbonate (PC) à longues chaînes présentant une masse molaire élevée et l'autre polymère comprend du polycarbonate à courtes chaînes, en particulier en matériaux recyclés.

6. Élément de sécurité selon l'une des revendications précédentes, **caractérisé en ce que** l'indice de fluidité à chaud en volume d'un polymère est d'environ 5 cm³/10 min et l'indice de fluidité à chaud en volume de l'autre polymère est d'environ 35 cm³/10 min à une température de 300°C et sous une masse de 1,2 kg.

7. Élément de sécurité selon l'une des revendications précédentes, **caractérisé en ce qu'**un polymère comprend du poly(acide lactique) (PLA) et l'autre polymère comprend du polycarbonate (PC).

8. Élément de sécurité selon l'une des revendications précédentes, **caractérisé en ce qu'**un polymère est un poly(acide lactique) (PLA) présentant une température de fusion de 200°C et l'autre polymère est un polyester présentant une température de fusion de 260°C.

9. Élément de sécurité selon l'une des revendications précédentes, **caractérisé en ce que** le polymère de base et le polymère support sont des polymères présentant des propriétés polaires ou non polaires différentes.

10. Élément de sécurité selon l'une des revendications précédentes, **caractérisé en ce qu'**un polymère est un PETG et l'autre polymère est un polyéthylène.

11. Élément de sécurité selon l'une des revendications précédentes, **caractérisé en ce que** le polymère support est translucide de telle sorte qu'une deuxième couche (21) supplémentaire, agencée sous la deuxième couche (22) contenant le polymère support, peut être observée à travers le polymère support.

12. Procédé de fabrication d'un élément de sécurité selon l'une des revendications précédentes, présentant les étapes :
a) mise à disposition d'un premier flux de matière (11MS) d'une première matière présentant un polymère de base, qui présente une première couleur (11F) en tant que couleur de base du corps (10) ;
b) mise à disposition d'au moins un deuxième flux de matière (21MS, 22MS) d'une deuxième matière présentant un polymère support, qui présente une deuxième couleur (21F, 22F), qui est différente de la première couleur (11F), le polymère support du deuxième flux de matière et le polymère de base présentant des propriétés matérielles différentes de telle sorte qu'ils ne se mélangent pas de manière homogène ;
c) réunion du premier et dudit au moins un deuxième flux de matière (11MS, 21MS, 22MS) dans un dispositif d'extrusion (50) en une structure stratifiée présentant une couche de base (11), qui comprend la première matière, et au moins une couche colorée (21, 22) qui comprend la deuxième matière, les couches (11, 21, 22) étant superposées verticalement avec des répartitions d'épaisseur variables par rapport à la surface visible (12) du corps (10) et formant des zones de surface colorées (23) réparties de manière irrégulière, suite à quoi, en vue du dessus sur le corps (10), des couleurs multiples aléatoires peuvent être identifiées.

13. Procédé selon la revendication 12, dans lequel le dispositif d'extrusion (50) reçoit le premier flux de matière (11MS) à partir d'une première extrudeuse (110) et le deuxième flux de matière (21MS, 22MS) à partir d'au moins une deuxième extrudeuse (210, 220).

14. Procédé selon l'une des revendications 12 ou 13, dans lequel le premier flux de matière (11MS) et le deuxième flux de matière (21MS, 22MS) sont soumis, dans le dispositif d'extrusion (50), en particulier dans un dispositif de compression (320) et/ou un bloc d'alimentation (300) et/ou une filière (310) du dispositif d'extrusion (50), à une pression massique entre 10 et 100 bars, de préférence entre 10 et 60 bars et le plus préférablement entre 20 et 50 bars.

15. Procédé selon l'une des revendications 12 à 14, **caractérisé en ce que** lors de la réunion des flux de matière (11MS, 21MS, 22MS), des irrégularités d'écoulement de matière des flux de matière (21MS, 22MS) de la deuxième matière sont admises, qui provoquent une répartition irrégulière des polymères support des deuxièmes couches (21, 22).
